# EUROPEAN PATENT APPLICATION

(11) **EP 0 717 202 A1**
(43) Date of publication of application: **19.06.1996**
(21) Application number: 95308319.3
(22) Date of filing: 21.11.1995
(51) Int. Cl.: F16B 5/06

(54) **Sheet metal fastener**

(30) Priority: 12.12.1994 JP 307386/94
(71) Applicant: EMHART INC., Newark, Delaware 19711 (US)
(72) Inventor: Kanie, Hideki, Nissin-shi, Aichi-Ken (JP)
(74) Representative: Moffat, John Andrew

(57) **Abstract**

In known sheet metal fasteners holding members may not be deformed, and hence the fastener will not be secured, unless force is uniformly applied to the head of the fastener to fold the folding members. To solve this problem the fastener (1) of the present invention is provided with a guide member (13) longitudinally extending to a shank (3) to guide a head (9) toward the shank when holding members (7,7) are folded, both the guide member and the shank having engagement means (14,14) to bring one thereof into engagement with the other to keep the holding members as folded.

## Description

The present invention relates to a sheet member fastener to be used for fixing a sheet member such as a silencer (noise insulation plate) of automobile to another member such as a vehicle body.

There are known sheet member fasteners for fixing a sheet member to another member such as a vehicle body. The fastener described in Japanese U.M. Publication No. 62-33132 shows such an example. That publicly known sheet member fastener has a shank to be inserted into a mounting hole of the sheet member, a flange disposed at an end of the shank with its diameter being larger than the mounting hole of the sheet member for supporting one surface of the sheet member, a pair of hinged-arm holding members to supporting the other surface of the sheet member when they are radially outwardly folded around the hinges, and a head to connect all of the ends of the holding members to make a pantograph shape. In the sheet member fastener, the holding members as expanded are inserted into the hole of the sheet member to bring the flange into contact with a surface of the sheet member and then the holding members, which extend from the other surface of the sheet member, are radially outwardly folded around the hinges which are at the mid positions so as to bring the members into abutment with the other surface of the sheet member to thereby attach the fastener with the sheet member. Thus, the fastener can be attached to the sheet member prior to an attachment operation thereof to the other member. Thus, the attachment operation to a stud standing on the panel is simply accomplished by holding and pressing the fastener of the sheet member onto the stud.

In the above fastener, the holding members are held as folded by means of both the engagement protrusions on the lower surface of the head and the engagement edges on the upper end surface of the shank. If force is failed to be uniformly applied to the holding members however, the pantograph shape tends to be deformed to hinder the engagement protrusions on the lower surface of the head from engaging with the engagement edges on the upper end surface of the shank. In view of this drawback, Japanese U.M. Publication No. 1-13844 discloses a sheet member fastener in which the holding members extend from the portions of the upper end of the shank on which stoppers are formed to prevent the holding members from falling. Nevertheless, even this fastener, the pantograph shape is deformed if force is not uniformly applied. The degree of falling is somewhat reduced but no fundamental solution of the problem is offered.

Accordingly, the present invention aims to provide a sheet member fastener which allows the holding members to be folded while kept in a proper pantograph shape even if force is not uniformly applied to the head in folding the holding members which are radially outwardly folded around the hinges in the mid-positions. Another object of the present invention is to provide a sheet member fastener which can be attached to sheet members of various thicknesses.

In order to attain the above-described objects, according to the present invention, there is provided a sheet member fastener for mounting a sheet member on another member wherein the fastener is inserted into a mounting hole of the sheet member and attached to the sheet member so as to hold opposite surfaces of the sheet member, the sheet member fastener comprising a shank adapted to be inserted into the mounting hole of the sheet member, a flange disposed at an end of the shank and having a diameter larger than the mounting hole of the sheet member to support one of the surfaces of the sheet member, a plurality of hinged-arm holding members disposed at the other end of the shank to take a position that an extension of the shank is made when expanded and another position that the other surface of the sheet member is held when the mid portions of the holding members are folded radially outwardly around their hinges, and a head for connecting the ends of the holding members to each other. The sheet member fastener of the present invention is characterised in that the head is provided with a guide member longitudinally extending to the shank to guide the head toward the shank when the holding members are folded, and both the guide member and the shank have engagement means to bring one thereof into engagement with the other in order to keep the holding members as folded. According to those features, when the holding members are radially outwardly folded around the hinges at the mid positions, the head is reliably guided toward the shank even if force is not uniformly applied to the head. This allows the holding members to be folded while maintaining a correct pantograph shape so that the folded holding members are held in a suitable fashion.

Further, according to the present invention, there is provided a sheet member fastener characterised in that the head is provided with a guide member longitudinally extending to the shank to guide the head toward the shank when the holding members are folded; both the guide member and the shank have first engagement means to bring one thereof into engagement with the other in order to keep the holding members as folded; the shank comprises a first shank portion of a large diameter formed as a hollow tube and a second shank portion of a small diameter formed as a hollow tube to be inserted into the first shank portion and to receive the guide member therein; and the first and second shank portions are formed with second engagement means to connect the shank portions to each other with the second engagement means being formed at a plurality of positions along the length of the shank whereby the entire length of the first and the second shank portions can be changed. Since the above fastener enables the first and second shank portions to change the entire length, the fastener can be surely attached to sheet members of various thicknesses even if the thickness of the sheet member is changed over a wide range.

According to the present invention, the sheet member fastener can be formed to be attached to a threaded stud standing on a panel. In that case, each of the flange and the shank has a through hole to receive the threaded stud and the guide member is formed with engagement pawls to engage with threads of the stud which is received in the shank. The fastener can also be formed to engage with a mounting hole of another member such as a panel. In that case, an anchor-legged engagement portion is formed at the end of the guide member or on the flange.

The invention will now be described, by way of example only, with reference to the accompanying drawings in which:
Figure 1 is a plan view of a fastener of a first embodiment according to the present invention;
Figure 2 is a front view of the fastener of Figure 1;
Figure 3 is a side view of the fastener of Figure 1;
Figure 4 is a sectional view taken along line A-A of Figure 1;
Figure 5 is a partial sectional view taken along line B-B of Figure 1;
Figure 6 is a sectional view taken along line C-C of Figure 2;
Figure 7 is a sectional view taken along line D-D of Figure 2;
Figure 8 is a sectional view taken along line E-E of Figure 2;
Figure 9 is a sectional view showing the faster of Figure 1 which is attached to a sheet member;
Figure 10 is a sectional view showing the state in which the sheet member having the fastener of Figure 1 is mounted on a panel;
Figure 11 is a diagram showing a modification of the fastener that still another can be attached to the head;
Figure 12 shows a head having an engagement groove for rotation;
Figure 13 shows a head having a knob for rotation;
Figure 14 is a partial front view of the fastener in which the head and the holding members are formed with ridges for rotation;
Figure 15 is a front view of a fastener of a second embodiment according to the present invention;
Figure 16 is a partially broken side view of the fastener of Figure 15;
Figure 17 is a sectional view taken along line I-I of Figure 15;
Figure 18 is a sectional view taken along line J-J of Figure 15;
Figure 19 is a sectional view showing that the fastener of Figure 15 inserted into a sheet member;
Figure 20 is a sectional view showing the fastener of Figure 15 of which the head is being pressed in;
Figure 21 is a sectional view showing that the fastener of Figure 15 is attached to the sheet member;
Figure 22 is a front view of a fastener of a third embodiment according to the present invention;
Figure 23 is a side view of the fastener of Figure 22;
Figure 24 is a sectional view taken along line K-K of Figure 22;
Figure 25 is a plan view of a fastener of a fourth embodiment according to the present invention;
Figure 26 is a front view of the fastener of Figure 25;
Figure 27 is a side view of the fastener of Figure 25;
Figure 28 is a sectional view taken along line L-L of Figure 25;
Figure 29 is a partial sectional view taken along line M-M of Figure 25;
Figure 30 is a sectional view taken along line N-N of Figure 26;
Figure 31 is a sectional view taken along line P-P of Figure 26;
Figure 32 is a sectional view showing that the fastener of Figure 25 is attached to a thick sheet member; and
Figure 33 is a sectional view showing that the fastener of Figure 25 is attached to a relatively thin sheet member.

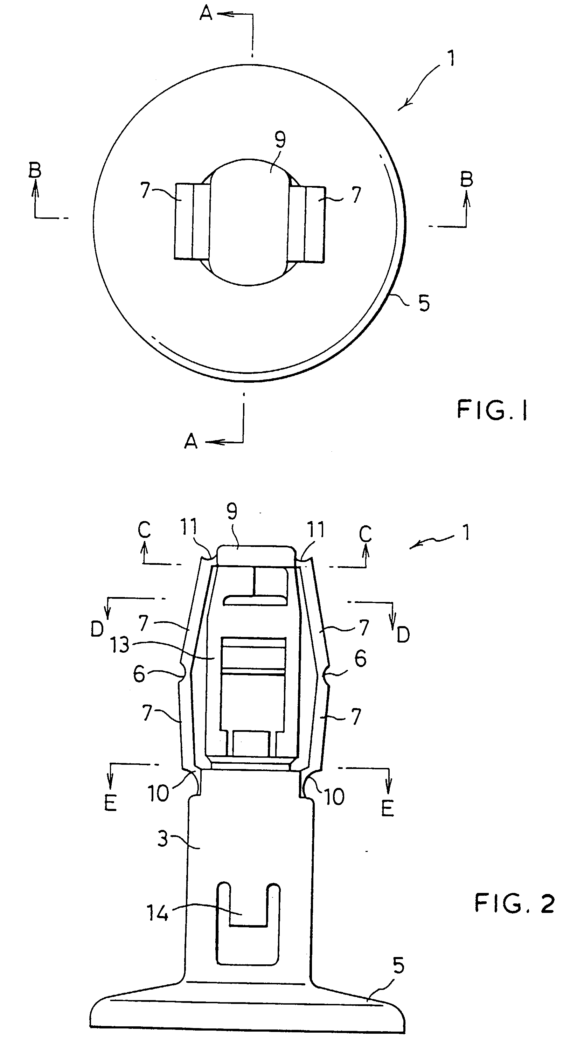

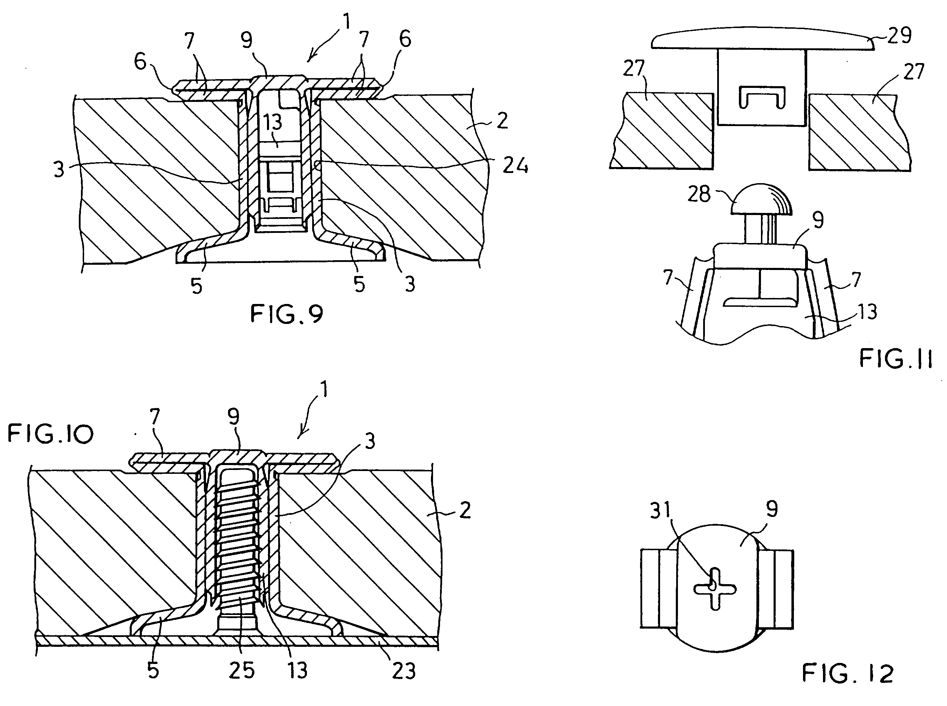

The present invention is described further by way of embodiments, with reference to accompanying drawings. Figures 1 through 10 shows a sheet member fastener 1 of a first embodiment according to the present invention. Figures 1 through 8 show the structure of the fastener 1 and Figures 9 and 10 show that the fastener 1 is attached to a sheet member 2, such as an automobile silencer (noise insulation plate). The sheet member fastener 1 according to the present invention has a shank 3 to be inserted into a mounting hole of the sheet member, a flange 5 disposed at an end (lower end) of the shank 3 and having a diameter larger than the mounting hole of the sheet member to support a surface (lower surface) of the sheet member, a pair of hinged-arm holding members 7, 7 disposed at the other end (upper end) of the shank 3 and extending to make an extension of the shank 3 when expanded and further holding the other surface (upper surface) of the sheet member when the holding members are folded radially outwardly around hinges 6 at the mid positions, and a head 9 to connect the ends (upper ends) of the holding members 7 to each other. The upper ends and the lower ends of the holding members 7 are connected to the shank 3 and the head 9 through hinges 10 and 11, and the holding members 7 are folded into a pantograph form. The number of the holding members is not limited to two, but it may be selected to three or more.

The head 9 is provided with a guide member 13 longitudinally extending to the end of the shank 3 to guide the head 9 when the holding members 7, 7 are folded around the hinges 6. In the illustrated embodiment, the shank 3 is formed as a hollow tube. The guide member 13 is formed so that it can be inserted in the hollow portion of the shank 3. When pressed in, the head 9 is reliably positioned adjacent to the upper end of the shank 3. The holding members 7 are folded without deforming their pantograph shape, so as to bring them into surface contact with the upper surface of the sheet member to press it as shown in Figures 9 and 10. As long as the head 9 is guided the end of the shank 3, neither a hollow shank nor an elongated hollow guide member is necessary. The guide member 13 is formed to have vacant spaces on the sides of the mid position for convenience in molding, saving the material, reducing the weight, or the like.

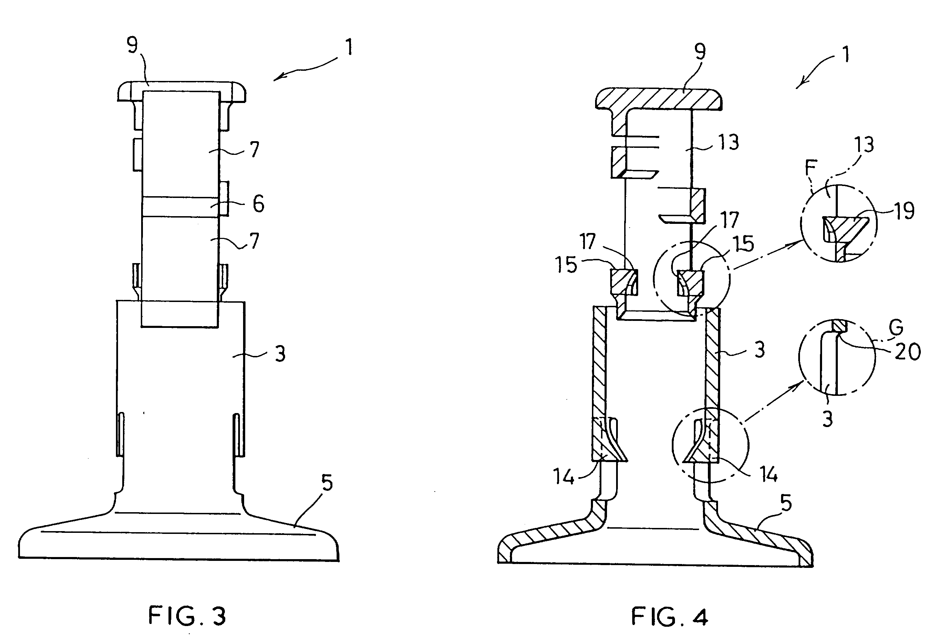

On the outer surface of the guide member 13 and on the inner surface of the shank 3, engagement means are provided to keep the holding members as folded. That is to say, the shank 3 is formed with a pair of engagement pawls 14, 14 projecting inwardly from a position close to the flange 5. Correspondingly, the guide member 13 is formed with a pair of engagement shoulders 15, 15 slightly outwardly projecting. Each engagement shoulder 15 is formed with an engagement pawl 17 projecting inwardly in the guide member 13 to engage with a threaded stud received in the hollow portion. As shown in Circles F and G in Figure 4, the engagement pawls 14 and the engagement shoulders 15 may be substituted with engagement pawls projecting outwardly from the outer surface of the guide member 13 and engagement shoulders formed in the shank 3, respectively. It is preferable to form the engagement pawls 14 of the shank 3 in a position very close to the flange 5 to increase the length of the unperforated tubular portion of the shank 3 above the engagement pawls 14, so that the tubular portion can be formed in an outer diameter that is close to the inner diameter of the mounting hole of the sheet member. Thus, the tubular portion can increase the noise insulation effect even if the silencer is thin. In order to enhance the noise insulation effect, it is also preferred to form the head 9 in such a shape that covers a gap between the shank 3 and the guide member 13.

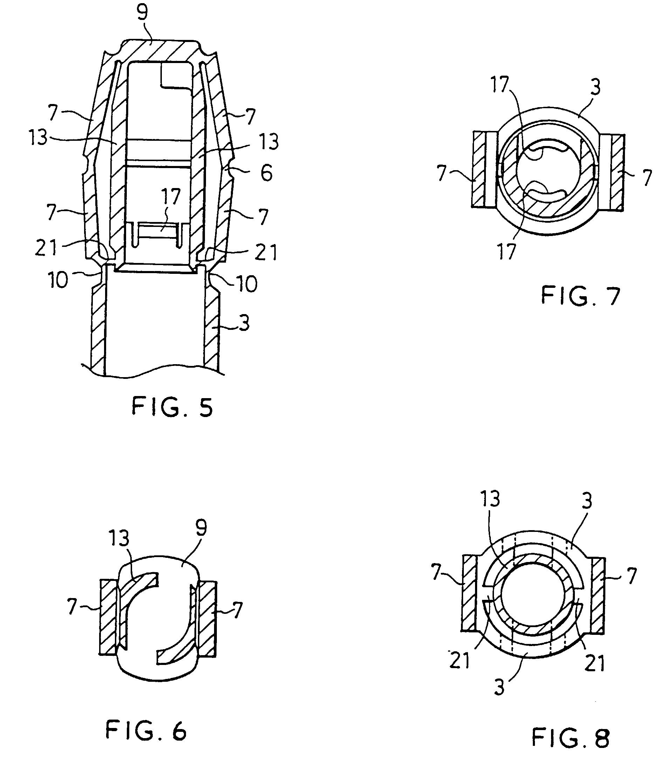

The flange 5 is formed as a hollow member opening to the shank 3 so as to receive a threaded stud which stands on a panel as another member. As shown in Figure 4, the inside of the flange 5 opens in a horn configuration to pick up the end of the stud easily. As described earlier, the guide member 13 is also formed in a through hole to receive the stud. A pair of engagement pawls 17, 17 are formed into engagement with threads of the received stud. When the engagement pawls 17 are offset heightwise with a pitch corresponding to the threads of the threaded stud, so that the engagement force can be increased. The engagement pawls 17 may be formed in the shank 3. If they are formed in the guide member 13, however, the force to hold the silencer is maintained at a fixed level once it has been attached to the stud, without being affected by the coupling force between the engagement pawls 14 and the engagement shoulders 17 for keeping the holding members 7 as folded. In order to keep the holding members as expanded, as shown in Figures 5 and 8, the lower ends of the holding members 7 are connected via thin coupling portions 21 to the lower end of the guide member 13. This prevents the holding members 7 from being folded when they are inserted through the sheet member so that the insertion of the holding members 7 is facilitated. The coupling portions 21 are made only for facilitating the insertion, but they are not indispensable. The thin coupling portions 21 are weak enough to be broken when the head 9 is pressed in. In the illustrated embodiment, the end of the guide member 13 gets slightly into an upper portion of the shank 3 while the holding members 7, 7 are expanded. Thus, the guide member 13 is guided into the shank 3 simply when the head 9 is pressed in so as to ensure the rotation of the guide member 13 into the shank 3.

With reference to Figures 9 and 10, explanation is made on attaching operations of the above structured fastener 1 to the sheet member 2, which is silencer or the like, and then of the sheet member 2 to a panel 23 such as a vehicle body. To begin with, the head 9 of the fastener 1 as shown in Figure 2 and the like is positioned in a mounting hole 24 of the sheet member 2. Then, the head 9, the holding members 7 and the shank 3 are pressed into the mounting hole to bring the flange 5 into surface-contact with the lower surface of the sheet member 2. Next, while the flange 5 is held not away from the sheet member 2, the head 9 is pressed strongly toward the flange to break the thin coupling portions 21. By the pressing operation, the holding members 7 are radially outwardly folded around the hinges 6 to form a second flange. At that time, the engagement pawls 14 of the shank 3 come into engagement with the engagement shoulders 15 of the guide member 13 to keep the holding members as folded, so that the fastener 1 is attached to the sheet member 2 as shown in Figure 9.

In order to mount the sheet member 2 attached to the fastener 1 on the panel 23 such as a vehicle body, the flange 5 of the fastener 1 of the sheet member 2 is positioned on the end of a threaded stud 25 and then pressed onto it. As the inside of the flange 5 is formed in a horn profile, the pressing operation allows the end of the threaded stud 25 to be inserted into the guide member 13 positioned in the shank 3. The engagement pawls 17, 17 of the guide member 13 come into engagement with threads of the stud 25 to mount the sheet member 2 on the panel 23 as shown in Figure 10.

Figure 11 shows a modified fastener in which the head 9 of the fastener 1 is provided with a protrusion 28 for mounting another member 27 which is a carpet, for example. In Figure 11, the protrusion 28 is positioned on a mounting hole of the member 27 and a button type clip 29 is brought from the opposite side into engagement with the protrusion 28 to mount the member 27 on the fastener. In the illustrated example, the head 9 is provided with the protrusion. However, a hole may be made in the head in place of the protrusion to mount a carpet or the like by means of a pin type clip (not shown).

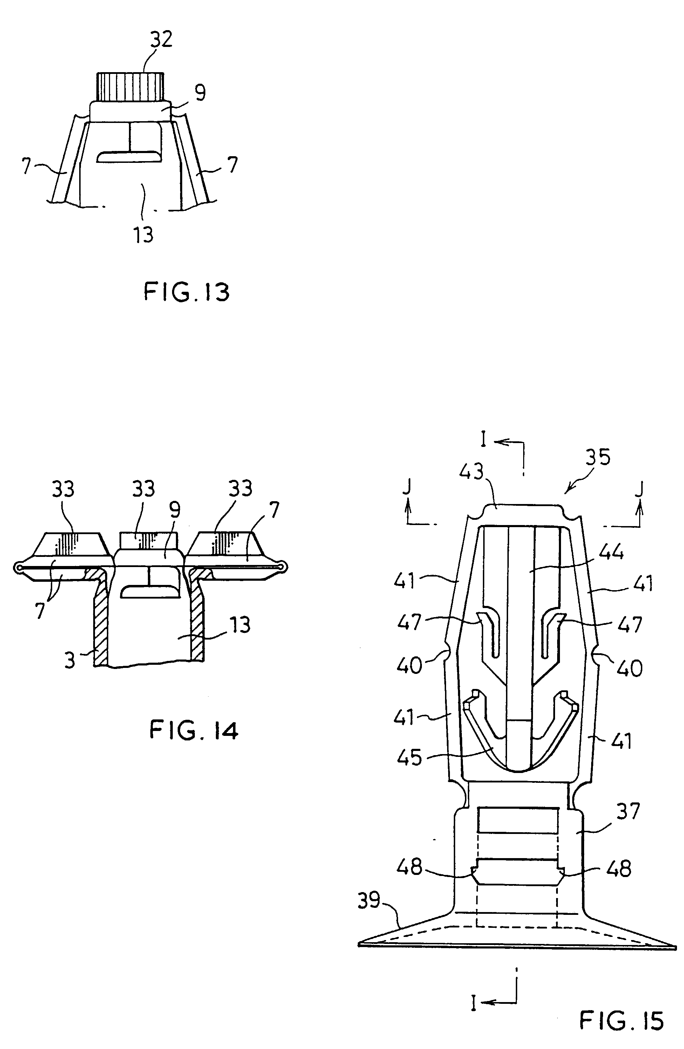

When the sheet member 2 is detached from the panel 23 for inspection, repair or the like, the head 9 may be rotated to rotate the guide member 13 in a de-screwing direction around the stud 25. To facilitate the rotation, an engagement groove 31 for a screwdriver may be formed. A knob 32 shown in Figure 13 may also be formed on the head 9 for rotation by hand. As shown in Figure 14, it is also possible to form ridges 33 on the head 9 and the holding members 7 for easy rotation by hand.

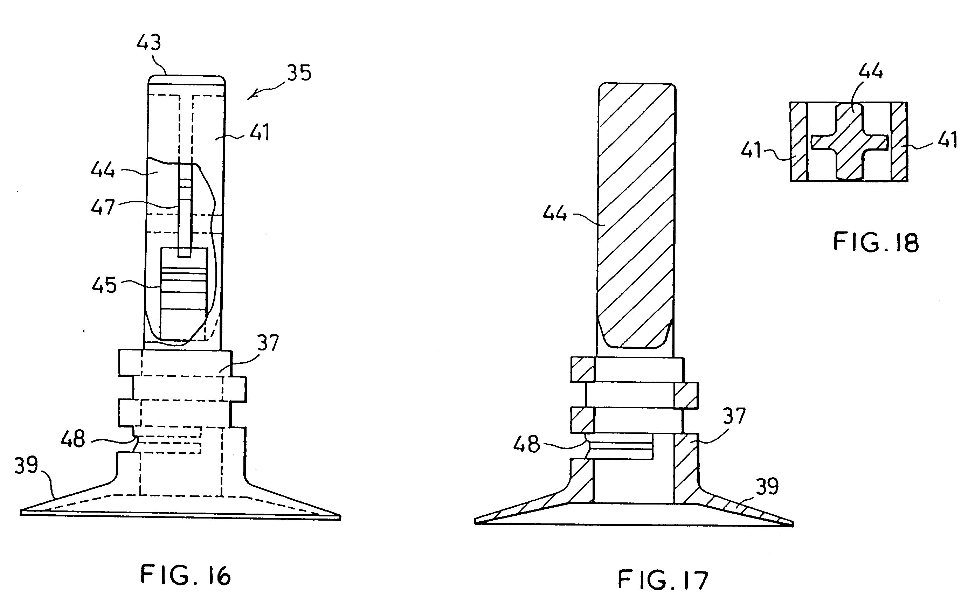

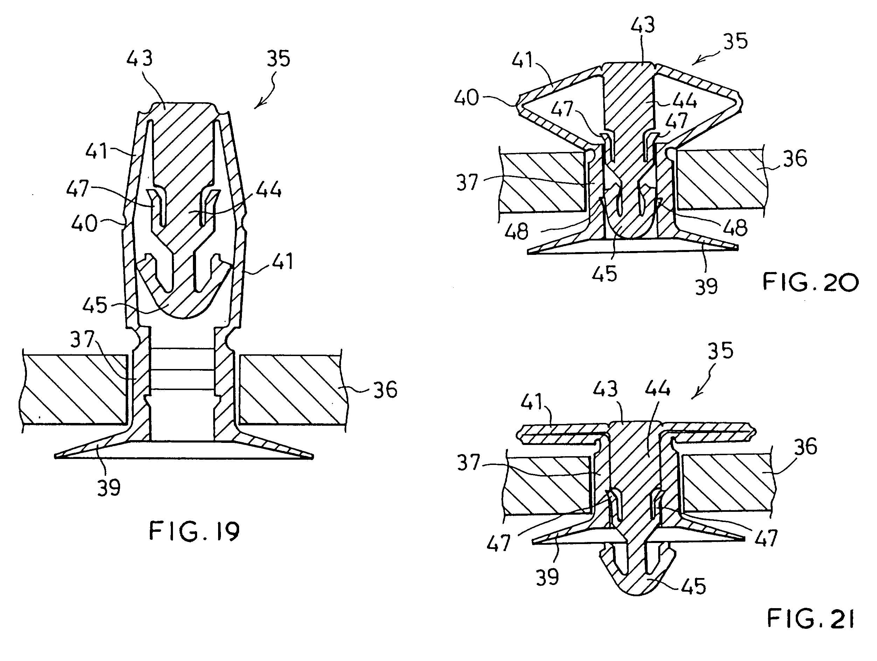

Figures 15 through 21 show a sheet member fastener 35 of a second embodiment according to the present invention. The structure of the fastener 35 is shown in Figures 15 through 18 and the attaching operation of the fastener 25 to a sheet member 36 is shown in Figures 19 through 21. Unlike the fastener 1 of the first embodiment, the fastener 35 is used where the panel 23 (See Figure 10) is formed with a mounting hole instead of a threaded stud. The fastener 35 comprise a shank 37 to be inserted into a mounting hole of the sheet member; a flange 39 disposed at an end of the shank 37 and having a diameter larger than the mounting hole of the sheet member to support one of the surfaces of the sheet member; a pair of holding members 41, 41 disposed at the other end of the shank 37 and extending to make an extension of the shank 37 when expanded and supporting the other surface of the sheet member when radially outwardly folded around hinges 40 at the mid positions; and a head 43 to connect the ends of the holding members 41 to each other. when the head 43 is pressed in, the holding members 41 are folded into a pantograph shape.

The head 43 is provided with a guide member 44 longitudinally extending to the end of the shank 37 to guide the head 43 into the shank 37 when the holding members 41 are folded around the hinges 40. In this embodiment, the shank 37 is formed as a hollow tube. The guide member 44 is made elongated and cruciform in section to be inserted into the hollow portion of the shank 37. In this embodiment, the end of the guide member 44 is formed with an anchor-legged engagement portion 45 for insertion into and engagement with a mounting hole of a member such as a panel. The anchor-legged engagement portion 45 is to be inserted into the mounting hole of the panel to fix the fastener 35 to the panel.

A pair of engagement pawls 47, 47 are formed on the guide member 44 above the anchor-legged engagement portion 45. Correspondingly to the pawls, a pair of engagement shoulders 48, 48 are formed on the inner surface of the shank 37. The engagement pawls 47 and the engagement shoulders 48 keep the holding members 41 as folded. In this embodiment, the holding members 41 can also be connected via thin coupling portions to the lower end of the guide member 44 so as to be kept as expanded.

With reference to Figures 19 through 21, attaching operation of the fastener 35 of the above-stated structure to a sheet member 36 is described. In Figure 19, the head 43 of the fastener 35 is positioned on the mounting hole of the sheet member 36. Then, the head 43, the holding members 41 and the shank 37 are pressed into the mounting hole to bring the flange 39 into surface-contact with the lower surface of the sheet member 36. Next, when the head 43 is pressed to the flange as shown in Figure 20, the anchor legs of the anchor-legged engagement portion 45 passes through the hollow portion of the shank 37 while the anchor legs are bent inwardly. At this time, the holding members 41 are radially outwardly folded around the hinges 40 to form a second flange on the upper surface of the sheet member 36. At the end of the pressing operation, the engagement pawls 47 of the guide member 44 come into engagement with the engagement shoulders 48 of the shank 37 to keep the holding members 41 as folded so that the fastener 35 is attached to the sheet member 36 as shown in Figure 21. The anchor-legged engagement portion 45 formed at the end of the guide member 44 projects from the flange 39 so that the engagement portion 45 is inserted into a mounting hole of another panel such as a vehicle body to mount the sheet member on the panel. In this embodiment, either a protrusion or a hole may be provided for mounting a carpet or some other member as shown in Figure 11. The anchor-legged engagement portion 45 may be made in a form having a removable function (for example, the form widely in use for mounting an ornamental panel of automobile (not illustrated)), so that the silencer can be attached or detached as desired.

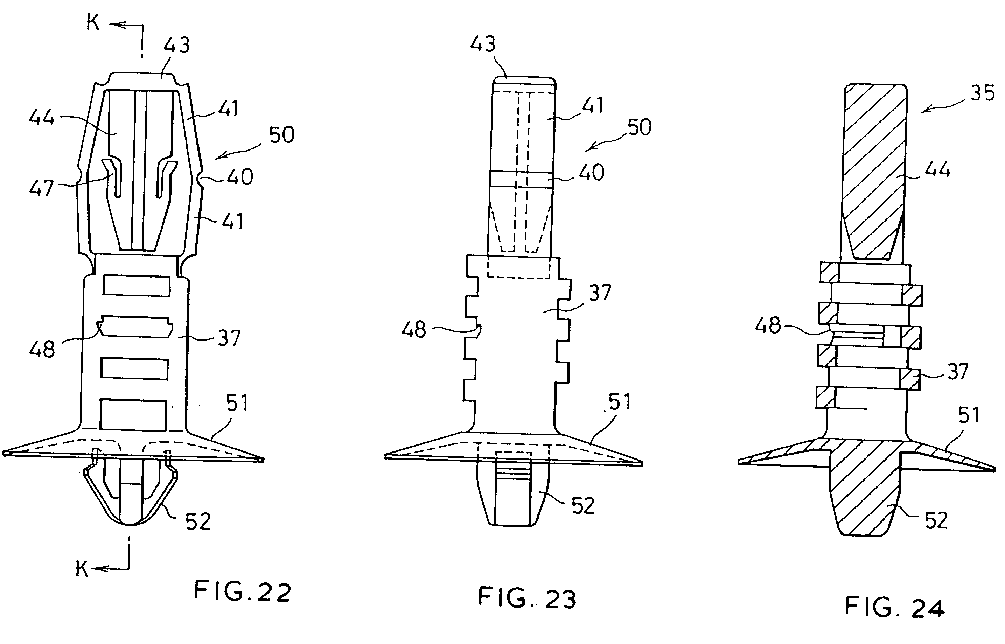

Figures 22 through 24 show a sheet member fastener 50 of a third embodiment according to the present invention. Like the second embodiment fastener 35, the fastener 50 is used for the panel which is formed with a mounting hole rather than a threaded stud. The fastener 50 is different from the fastener 35 in a point that a flange 51 is formed with an anchor-legged engagement portion 52 whereas the fastener 35 has the anchor-legged engagement portion 45 formed at the end of the guide member 44. Therefore, not only the fastener 50 can be attached to the panel after it is attached to the sheet member but also the fastener 50 can be attached previously to the panel so that the sheet member is fastened to the fastener (the panel). Any more description is omitted since the remaining structure of the fastener 50 is similar to the fastener 35.

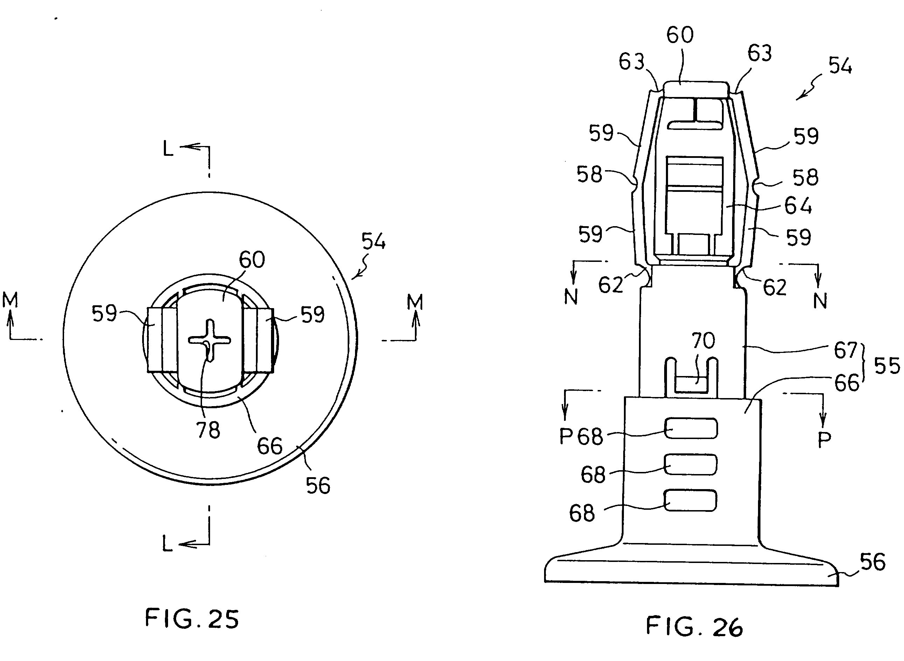

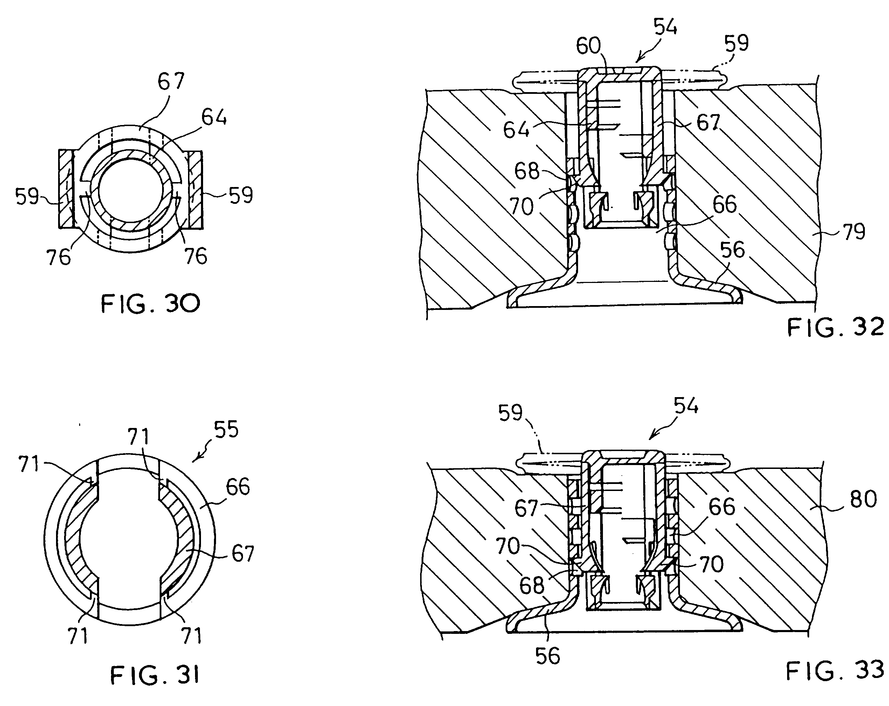

Figures 25 through 33 show a sheet member fastener 54 of a fourth embodiment according to the present invention. Figures 25 through 31 show the structure of the fastener 54. Figures 32 and 33 show that the fastener 54 is attached to one of plural sheet members having different thicknesses. The fastener 54 has a shank 55 to be inserted into a mounting hole of a sheet member; a flange 56 disposed at an end of the shank 55 and having a diameter larger than the mounting holes of the sheet member to support a surface of the sheet member; a pair of holding members 59, 59 disposed at the other end of the shank 55 and. extending to make an extension of the shank 55 when expanded but supporting the other surface of a sheet member when radially outwardly folded around hinges 58 in the mid positions; and a head 60 to connect the ends of the holding members 59 to each other. The upper and lower ends of each holding member 59 are connected to the shank 55 and the head 60 via hinges 62 and 63, respectively, so as to fold the holding members into a pantograph form. In this embodiment, the head 60 is also provided with a longitudinally extending guide member 64 to guide the head 60 toward the shank 55.

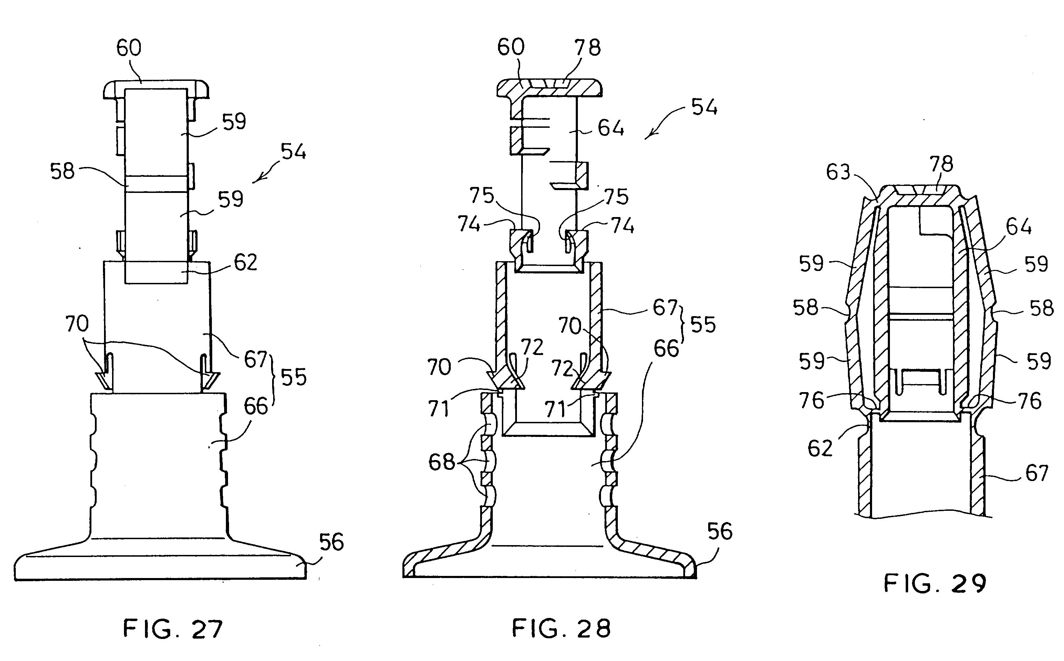

In the fastener 54, the shank 55 comprises a first hollow tubular shank portion 66 of a large diameter and a second shank portion 67 which has a smaller diameter so that the second shank portion 67 is inserted into the first shank portion 66 and is formed as a hollow tube so as to receive the guide member 64. The first shank portion 66 is formed with a plurality (three in the shown embodiment) of windows 68 in an axial direction to define engagement shoulders. The second shank portion 67 is formed with a pair of engagement pawls 70, 70 to engage with the engagement shoulders as defined by the windows 68. Since the shank 55 comprises the first and second shank portions 66 and 67 with the first shank portion having the plurality of windows 68 for engagement the shoulders, the whole of the length of the shank 55 can be changed. As shown in Figures 28 and 31, the first shank portion 66 and the second shank portion 67 are connected to each other by means of a plurality of thin coupling portions 71 under a condition that the second shank portion 67 extends from the first shank portion 66 with a maximum extension. Accordingly, when both the portions are connected together via the thin coupling portions 71, the entire length of the shank 55 is a maximum length. The fastener can be used under the condition that both the shank portions are connected together via the thin coupling portions 71.

The guide member 64 is made in such an elongated form that it is inserted into the hollow portion of the second shank portion 67, and the guide member 64 has the same form as the guide member 13 of the fastener of the first embodiment. Therefore, for its engagement with the second shank portion 67, engagement pawls 72 are formed inside the paired engagement pawls 70 of the second shank portion 67, respectively. Correspondingly to them, a pair of engagement shoulders 74 slightly outwardly project on the guide member 64. The engagement shoulders 74 are formed with engagement pawls 75 to engage with a threaded stud which is received in the hollow portion of the guide member 64. The engagement pawls and the engagement shoulders may be formed in either the guide member or the second shank portion. It is preferred that the paired engagement pawls 75, 75 are staggered heightwise in accordance with the pitch of the threads of the threaded stud to increase the engagement force to engage with the threads.

As shown in Figures 29 and 30, the lower ends of the holding members 59 are connected to the lower end of the guide member 64 via second thin coupling portions 76. Therefore, the holding members 59 are prevented from being folded when inserted into the sheet member so that the insertion can easily be accomplished. Preferably, the second thin coupling portions 76 has a coupling force less than the first thin coupling portions 71 which connect the first shank portion 66 to the second shank portion 67. This ensures that the holding members 59 are folded or set before the second shank portion 67 is inserted into the first shank portion 66 (to shorten the entire length of the shank). As shown in Figure 25, a screwdriver engagement groove 78 may be formed on the head 60 to facilitate the removal of the sheet member from the panel for inspection, repair or the like. For easy removal, a knob or a ridge may also be formed as shown in Figures 13 or 14.

Figure 32 shows the fastener 54 is attached to a thick sheet member 79. In this example, the engagement pawls 70 of the second shank portion 67 engage with the engagement shoulders of the uppermost windows 68 of the first shank portion 66 to make the length suitable for the thick sheet member 79. In Figure 33, the fastener 54 is attached to a relatively thin sheet member 80. In this example, the engagement pawls 70 of the second shank portion 67 engage with the engagement shoulders of the lowermost windows 68 of the first shank portion 66 to make the length suitable for the sheet member 80. In Figures 32 and 33, the holding members extend from the front side of the drawing sheet to the rear side of the drawing sheet. Thus, holding members 59 cannot be visible in fact. However, for convenience in explanation, they are intentionally rotated by 90 degrees from the actual position with phantom lines or dot-chain lines.

The fastener 54 may be formed with a protrusion or a hole to attach a carpet or some other members to the head as shown in Figure 11. Further, the anchor-legged engagement portion of the fastener 35 shown in Figures 22 through 24 may be provided in the flange 56 of the fastener 54.

According to the present invention, when the holding members are radially outwardly folded around hinges in the mid positions, the head is reliably guided toward the shank even if uneven force is applied to the head. This allows the holding members to be folded while maintaining a proper pantograph shape. Besides, the shank preferably comprises a first shank portion and a second shank portion to make the length changeable, so that sheet members with various thicknesses can be mounted reliably. Further, the sheet member fastener according to the present invention may be formed to be attached to a threaded stud which stands on a panel. Alternatively, it may be formed to be attached to a mounting hole of another member such as a panel.

## Claims

1. A sheet member fastener for mounting a sheet member on another member wherein the fastener is inserted into a mounting hole of the sheet member and attached to the sheet member so as to hold opposite surfaces of the sheet member, the sheet member fastener comprising a shank adapted to be inserted into the mounting hole of the sheet member, a flange disposed at an end of the shank and having a diameter larger than the mounting hole of the sheet member to support one of the surfaces of the sheet member, a plurality of hinged-arm holding members disposed at the other end of the shank to take a position that an extension of the shank is made when expanded and another position that the other surface of the sheet member is held when the mid portions of the holding members are folded radially outwardly around their hinges, and a head for connecting the ends of the holding members to each other; characterised in that the head is provided with a guide member longitudinally extending to the shank to guide the head toward the shank when the holding members are folded, and both the guide member and the shank have engagement means to bring one thereof into engagement with the other in order to keep the holding members as folded.

2. The fastener according to claim 1 wherein the shank is a hollow tube, and when the guide member is inserted into the tubular shank, the holding members are folded and kept as folded by means of engagement pawls formed on either the inner side of the shank or the outer side of the guide member and engagement shoulders formed on the other.

3. The fastener according to claim 2 wherein each of the flange and the shank has a through hole to receive a threaded stud, and the guide member is formed with engagement pawls to engage with threads of the stud received in the shank.

4. The fastener according to claim 3 wherein the head is formed with a tool engagement groove, a knob or a ridge to rotate the guide member.

5. The fastener according to claim 3 wherein the holding members are connected via thin coupling portions to the guide member so as to keep the holding members as expanded.

6. The fastener according to claim 3 wherein when the holding members are expanded, the end of the guide member is positioned adjacent to the shank.

7. The fastener according to claim 2 wherein each of the flange and the shank is formed with a through hole through which the guide member passes and the end of the guide member is provided with an anchor-legged engagement portion which is inserted into and engages with a mounting hole of the other member.

8. The fastener according to claim 2 wherein the flange is provided with an anchor-legged engagement portion which is inserted into and engages with a mounting hole of the other member.

9. The fastener according to claim 1 wherein the head is formed with a protrusion or a hole for attaching another member thereto.

10. A sheet member fastener for mounting a sheet member on another member wherein the fastener is inserted into a mounting hole of the sheet member and attached to the sheet member so as to hold opposite surfaces of the sheet member, the sheet member fastener comprising a shank adapted to be inserted into the mounting hole of the sheet member, a flange disposed at an end of the shank and having a diameter larger than the mounting hole of the sheet member to support one of the surfaces of the sheet member, a plurality of hinged-arm holding members disposed at the other end of the shank to take a position that an extension of the shank is made when expanded and another position that the other surface of the sheet member is held when the mid portions of the holding members are folded radially outwardly around their hinges, and a head for the ends of the holding members to each other;
characterised in that the head is provided with a guide member longitudinally extending to the shank to guide the head toward the shank when the holding members are folded; both the guide member and the shank have first engagement means to bring one thereof into engagement with the other in order to keep the holding members as folded; the shank comprises a first shank portion of a large diameter formed as a hollow tube and a second shank portion of a small diameter formed as a hollow tube to be inserted into the first shank portion and to receive the guide member therein; and the first and second shank portions are formed with second engagement means to connect the shank portions to each other with the second engagement means being formed at a plurality of positions along the length of the shank whereby the entire length of the first and the second shank portions can be changed.

11. The fastener according to claim 10 wherein the first shank portion is connected via a thin portion to the second shank portion under a condition that the second shank portion extends from the first shank portion with a maximum extension.

12. The fastener according to claim 10 wherein each of the flange and the shank has a through hole to receive a threaded stud, and the guide member is formed with engagement pawls to engage with threads of the stud which is received in the second shank portion.

13. The fastener according to claim 12 wherein the head is formed with a tool engagement groove, a knob or a ridge to rotate the guide member.

14. The fastener according to claim 11 wherein the holding members are connected via second thin coupling portions to the guide member so as to keep the holding members as expanded, and the second thin coupling portions have a coupling force lower than the first thin coupling portions which connect the first shank portion with the second shank portion.

15. The fastener according to claim 10 wherein the flange is formed with an anchor-legged engagement portion to be inserted into and to engage with a mounting hold of the other member.

16. The fastener according to claim 10 wherein the head is formed with a protrusion or a hole for attaching a third member thereto.
